# EUROPEAN PATENT APPLICATION

(11) **EP 3 396 541 A1**
(43) Date of publication of application: **31.10.2018**
(21) Application number: 17305463.6
(22) Date of filing: 26.04.2017
(51) Int. Cl.: G06F 9/455, G06F 21/10, G06F 21/44

(54) **METHOD FOR MANAGING EXECUTION OF AN OPERATING SYSTEM IN A DEVICE**

(71) Applicant: GEMALTO SA, 92190 Meudon (FR)
(72) Inventor: GUICHARD, Oliver, 13881 GEMENOS CEDEX (FR); FABRE, Thierry, 13881 GEMENOS CEDEX (FR); CHENE, Gilles, 13881 GEMENOS CEDEX (FR)

(57) **Abstract**

The invention is a method for managing execution of a normal operating system (30) in a device (10) comprising a hardware platform (20) and a bare metal hypervisor (32) controlling all requests for access to the hardware platform. The hypervisor handles two separate environments: a normal execution environment, NEE, and a secure execution environment, SEE. The NEE comprises a normal operating system and the SEE comprises a secure operating system (50). The SEE comprises a DRM agent (40) run by the secure operating system. The hypervisor schedules execution of normal and secure operating systems in parallel. The DRM agent assesses a validity of a right to use the device by checking a parameter and sends a message reflecting said validity to the hypervisor. The hypervisor denies execution of the normal operating system if the right to use the device is invalid.

## Description

### (Field of the invention)

The present invention relates to methods of managing execution of an operating system in a device. It relates particularly to methods of controlling access to a device.

### (Background of the invention)

Generally users own their mobile devices. In another business model, the owner of the mobile device could be a company like a mobile network operator or a third party organization. In this last case, the owner of the mobile device could decide to rent it to a customer. In order to protect this business model, a software and/or hardware-based mechanism must guarantee that the device will become locked if the end user does not fulfil his contractual obligations. Consequently, the mobile device must be protected against uncontrolled reflashing procedure, malwares or root kits that would allow the end user to keep the usage of the mobile device without the agreement of the owner.

Some existing solutions allow to restrict access to only a part of the resources of a device. Typically, the access to audio or video files can be limited by specific rights. Such solutions are generally known as Digital Right Management (DRM).

Solutions based on a Trusted Execution Environment (TEE), as defined by GlobalPlatform Device Technology - TEE System Architecture GPD_SPE_009 standard for example, allow to protect access to so-called trusted applications running in the TEE. Unfortunately, such a trusted application depends on a call coming from a Rich Execution Environment (REE) which is less secure than the TEE. Since the security level of the REE is low, an attacker can modify the applications running in the Rich Execution Environment side so that they bypass the security provided by the TEE. Further to an attack, the trusted application may be never called or called in inappropriate manner.

There is a need to provide a technical solution to guarantee that the whole device can be used by a user only if the device owner allows it.

### (Summary of the Invention)

An object of the invention is to solve the above mentioned technical problem.

The object of the present invention is a device comprising a hardware platform and a bare metal hypervisor controlling all requests for access to the hardware platform. The hypervisor is configured to handle two separate environments: a normal execution environment (NEE) and a secure execution environment (SEE). The normal execution environment comprises a normal operating system. The secure execution environment comprises a secure operating system. The secure execution environment comprises a DRM agent configured to be run by the secure operating system. The hypervisor is adapted to schedule execution of both normal operating system and secure operating system in parallel. The DRM agent is configured to assess the validity of a right to use the device by checking a parameter and to send a message reflecting said assessed validity to the hypervisor. The hypervisor is configured to deny execution of the normal operating system if the right to use the device is invalid.

Advantageously, the hardware platform may include secure resources and the hypervisor, the secure execution environment and said secure resources may belong to a trusted zone for which the hardware platform prevents direct access to said secure resources from the normal execution environment.

Advantageously, the secure resources may include at least one element among the following list: a memory, a software, a bus transaction, an interrupt and a hardware peripheral.

Advantageously, the hardware platform (20) may support three virtualization extension levels: a hypervisor level running on top of the hardware platform, a kernel level running on top of the hypervisor level and a user level running on top of the kernel level. The hypervisor may run at the hypervisor level and being configured to handle the normal execution environment and the secure execution environment for both said kernel level and user level. The normal operating system may be configured to run astride the user level and kernel level. The secure operating system may be configured to run astride said user level and kernel level.

Advantageously, the hardware platform may be an ARMv8 © component.

Advantageously, the device may be a mobile phone, a tablet computer, a gaming machine, or a Machine-to-machine box.

Advantageously, the parameter may be an expiry date, a counter or a cryptogram.

Another object of the invention is a method for managing execution of a normal operating system in a device comprising a hardware platform and a bare metal hypervisor controlling all requests for access to the hardware platform. The hypervisor is configured to handle two separate environments: a normal execution environment (NEE) and a secure execution environment (SEE). The normal execution environment comprises a normal operating system and the secure execution environment comprises a secure operating system. The secure execution environment comprises a DRM agent run by the secure operating system. The hypervisor schedules execution of both said normal operating system and secure operating system in parallel. The DRM agent assesses the validity of a right to use the device by checking a parameter and sends a message reflecting said validity to the hypervisor. The hypervisor denies execution of the normal operating system if the right to use the device is invalid.

Advantageously, the hardware platform may include secure resources. The hypervisor, the secure execution environment and the secure resources may belong to a trusted zone for which the hardware platform prevents direct access to said secure resources from the normal execution environment.

Advantageously, the hardware platform may support three virtualization extension levels: a hypervisor level running on top of the hardware platform, a kernel level running on top of the hypervisor level and a user level running on top of the kernel level. The hypervisor may run at the hypervisor level and handle the normal execution environment and the secure execution environment for both said kernel level and user level. The normal operating system may run astride said user level and kernel level. The secure operating system may run astride the user level and kernel level.

Advantageously, the device may be a mobile phone, a tablet computer, a gaming machine or a Machine-to-machine box.

Advantageously, the parameter may be an expiry date, a counter or a cryptogram.

Advantageously, the secure operating system may receive an update message from an external device and update said parameter using the update message.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of architecture of a device according to a first embodiment of the invention,
- Figure 2 depicts an example of architecture of a device according to a second embodiment of the invention, and
- Figure 3 shows an example of a flow chart for controlling access to the device according to an embodiment of the invention.

### (Detailed description of the preferred embodiments)

The invention may apply to any type of electronic device. Such device may be a phone, a telecom device, gaming machine, a drone, a robot, a tablet PC, a M2M (Machine-to-machine) box, a meter, a smart watch, a slot machine, a TV, a vehicle (like a car) or a computer for example.

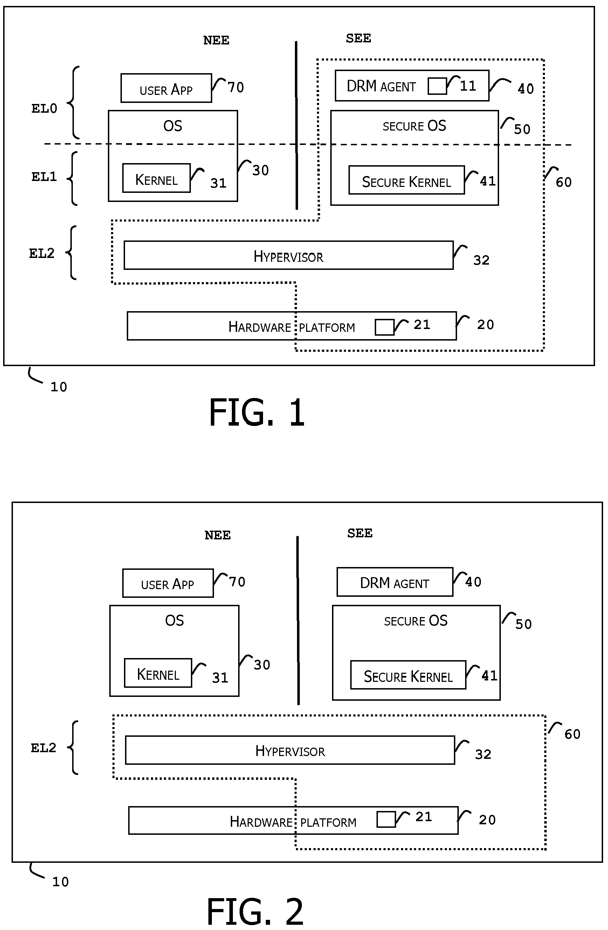

**Figure 1** shows an example of architecture of a device according to a first embodiment of the invention.

In this example, the device 10 is a mobile phone which comprises a hardware platform 20 and a bare metal hypervisor 32 (also named type-1 or native hypervisor) that controls all requests for access to the hardware platform 20. The hypervisor 32 runs directly on the hardware platform 20 to control hardware resources like memory, firmware, bus transactions, interrupts and hardware peripherals. The hypervisor 32 is adapted to handle two separate environments: a normal execution environment (NEE) and a secure execution environment (SEE). A normal operating system 30 is executed in the normal execution environment and a secure operating system 50 is executed in the secure execution environment. The normal operating system 30 includes a kernel 31 which provides an interface between the normal OS 30 and the hypervisor 32. Similarly, the secure operating system 50 includes a secure kernel 41 (software program) which provides an interface between the secure OS 50 and the hypervisor 32.

The hardware platform 20 comprises a processing unit able to execute the hypervisor 32.

In the example of Figure 1, the normal execution environment (NEE) comprises a user application 70 which is executed by the normal operating system (OS) 30 for providing a service to the user of the device 10.

The secure execution environment (SEE) has a higher security level compared to the normal execution environment (NEE). The SEE is a closed system (preferably devoid of third party application) while the NEE is an open system. The secure execution environment (SEE) is more resistant to attacks than the normal execution environment (NEE).

The hypervisor 32 is adapted to schedule execution of both the normal operating system 30 and the secure operating system 50 in parallel. In other words, the hypervisor 32 emulates a simultaneous execution on both sides (NEE and SEE) by scheduling threads in both execution environments so that these threads appear to be executed in parallel from the user point of view.

The secure execution environment comprises a software DRM agent 40 configured to be run by the secure operating system 50. The software DRM agent 40 is designed to assess the validity of a right to use the device 10 by checking a predefined parameter 11.

For instance, the parameter 11 can be an expiry date, a maximum usage counter or a cryptogram reflecting credential. According to the selected nature of the parameter, the DRM agent 40 can be configured to check the current date versus the expiry date, to check if the usage counter reached a preset threshold or to check the genuineness of the cryptogram through usual cryptographic algorithms.

The parameter 11 is internal to the device 10. Preferably, the parameter 11 is stored into the DRM agent 40 itself. Optionally, the parameter 11 can be stored into the secure operating system 50.

The DRM agent 40 is also configured to send (through the secure OS 50) to the hypervisor 32 a message reflecting the assessed validity status. The hypervisor 32 is configured to deny execution of the normal operating system 30 if the right to use the device 10 is invalid. Hence, the hypervisor 32 normally schedules the normal operating system 30 (i.e. the threads of the normal OS 30) if the received status is valid and stops the scheduling of the normal operating system 30 otherwise.

Preferably, the message is sent to the hypervisor 32 through an internal API (Application Programming Interface).

Advantageously, the DRM agent 40 can frequently assess the validity of the right to use the device 10 in order to detect the loss of right as soon as possible. For example, the DRM agent can check the right validity at each start-up of the device 10, every 30 minutes or at random times.

The DRM agent 40 can be implemented in any relevant language like Java ©, Javacard ©, assembler, C or C++.

In the example of Figure 1, the DRM agent 40 is an application executed above the secure OS 50. Alternatively, the DRM agent 40 can be implemented as a part of the secure operating system 50.

Thanks to the invention, the DRM agent 40 can detect a loss of right to use the device 10 while the normal OS 30 is running. Hence, the hypervisor 32 can block execution of the normal OS 30 (and, consequently, the user application 70) as soon as the right to use the device 10 becomes invalid.

It is to be noted that the invention allows to block the whole normal operating system 30.

In the embodiment of Figure 1, the hardware platform 20 includes a set of secure resources 21 which encompasses a memory, a firmware, bus transactions, interrupts and hardware peripherals. The device comprises a trusted zone 60 which includes both the hypervisor 32, the secure execution environment and the secure resources 21. The hardware platform 20 is designed to prevent direct access to the secure resources 21 from the normal execution environment 30. More generally, the hardware platform 20 is configured to forbid direct access to all software and hardware resources belonging to the trusted zone 60 from any entity located outside of the trusted zone 60. The trusted zone 60 protects the device 10 against attempts to hack the low layer of the device system. Advantageously, the trusted zone 60 can include an additional part (in addition to the secure resources 21) of the hardware platform 20. The trusted zone 60 can also include the whole hardware platform 20.

Preferably, the trusted zone 60 is protected by a secure boot mechanism, ensuring that each piece of software (and/or hardware) is genuine and valid. A primary boot loader can check the signature of second stage boot loader before executing it, then second stage boot loader can check a signature of the hypervisor 32 before starting it, and so on. Such a chain of trust allows to guarantee that both hypervisor 32 and secure operating system 50 have not been modified by a malicious entity.

In the embodiment of Figure 1, the hardware platform 20 supports three virtualization extension levels: an hypervisor level (EL2) running on top of the hardware platform 20, a kernel level (EL1) running on top of the hypervisor level (EL2) and a user level (EL0) running on top of the kernel level (EL1). The hypervisor 32 runs at the hypervisor level (EL2) and is configured to handle the normal execution environment and the secure execution environment for both said kernel level (EL1) and user level (EL0). The normal operating system 30 is configured to run astride both the user and kernel levels (EL0, EL1) . The secure operating system 50 is configured to run astride both the user and kernel levels (EL0, EL1). Both kernel 31 and secure kernel 41 are executed in kernel level (EL1).

For instance, the hardware platform 20 can be implemented with an ARMv8 © component. In this case, the hardware platform 20 includes a bootloader system named "ARM Trusted Firmware™" which ensures the secure and sequential starting up of every low-level layers.

**Figure 2** shows an example of architecture of a device according to a second embodiment of the invention.

In this embodiment, the hardware platform 20 supports only one virtualization extension level (EL2) dedicated to the hypervisor 32. The trusted zone 60 includes both the hypervisor 32 and the secure resources 21 of the hardware platform 20.

In another embodiment (not shown), the hardware platform 20 can be devoid of virtualization extension. In this case, the secure operating system 50 can be designed using formal specification techniques like Vienna Development Method (VDM) or B Method for instance. The secure operating system 50 can also be designed as a self-protected system which does not allow update/upgrade of itself.

According to the invention, the operating system dedicated to user application will be blocked if the user lost the right to use the device. The secure operating system will remain available for allowing updating of credential (e.g. parameter 11).

The invention is well-suited for deployment of pay per use solutions and rent business model.

For instance, usage of a gaming machine can be controlled thanks to the invention so that the gaming machine becomes blocked in the event of non-payment of the monthly payment of the user's subscription.

For instance, usage of a vehicle can be controlled thanks to the invention so that the vehicle becomes blocked in case the maximum number of start-up of the car has been reached.

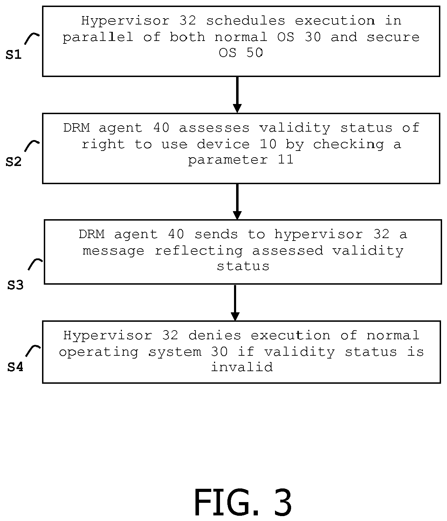

**Figure 3** shows an example of a flow chart for controlling access to the device according to an embodiment of the invention.

In this example, the device 10 is assumed to be similar to the device of Figure 1.

At step S1, the hypervisor 32 schedules execution of both the normal operating system 30 and secure operating system 50 in parallel.

In response to a predefined event, the DRM agent 40 assesses the validity of the right to use the device. At step S2. This assessment is performed by checking a parameter 11 which relates to the credential linked to usage of the device. This assessment can be performed by checking the value of a current field (date, counter, etc.) versus the parameter 11 which acts as a reference value stored in the trusted zone 60. The DRM agent 40 can also verify the validity of a certificate stored in a memory belonging to the trusted zone 60.

Additionally, the DRM agent 40 may also verify the genuineness of the executable code of the normal OS 30 by checking a signature (or a hash) of a part of the current executable code of the normal OS 30. This verification can allow to detect a malicious change in the executable code of the normal OS 30.

The predefined event can be triggered by a timer (internal event) or by a server push message (external event) if the secure OS has access to an external communication network for example.

It is to be noted that the triggering of the validity assessment by the DRM agent 40 is independent from the execution of threads/applications in the normal execution environment. In other words, the DRM agent 40 performs its checking processing independently of the NEE-side function/software execution.

At step S3, the DRM agent 40 sends a message reflecting the assessed validity status to the hypervisor 32. For instance, the DRM agent 40 can call a predefined function of the hypervisor 32 with the validity status as input parameter.

The DRM agent 40 can also use a hypervisor call (HVC) mechanism to communicate with the hypervisor 32.

At step S4, the hypervisor 32 denies execution of the normal operating system 30 if the right to use the device 10 is invalid (i.e. if the validity status is negative). Otherwise, the hypervisor 32 continues to normally schedule the normal operating system 30.

Optionally, another machine (like a remote server) can establish a secure communication session with the DRM agent 40 (or with the secure OS 50) in order to provision the device 10 with updated credential related to the right to use the device 10. For instance the secure operating system 50 can receives an update message from an external device and updates the parameter 11 using the update message. For example the external device may be a near trusted device (communicating through Wi-Fi, Bluetooth© or NFC) or a remote server communicating through Over-The-Air telecom protocol or Internet). Hence, right to use the device 10 (i.e. the right to use the NEE of the device 10) can be disabled, enabled or extended.

The invention is not limited to phone and may apply to any kind of electronic devices hosting an operating system.

Thanks to the invention, the right to use a device is assessed on-the-fly and execution of the normal operating system can be dynamically block if necessary.

An advantage of the invention is to allow the control of access to several normal Operating systems which are installed above the hypervisor.

The invention is not limited to the described embodiments or examples. In particular the features described in the above-presented examples and embodiments may be combined.

## Claims

1. A device (10) comprising a hardware platform (20) and a bare metal hypervisor (32) controlling all requests for access to the hardware platform (20), said hypervisor (32) being configured to handle two separate environments: a normal execution environment (NEE) and a secure execution environment (SEE), the normal execution environment (NEE) comprising a normal operating system (30), the secure execution environment (SEE) comprising a secure operating system (50),
**characterized in that** the secure execution environment (SEE) comprises a DRM agent (40) configured to be run by the secure operating system (50), **in that** said hypervisor (32) is adapted to schedule execution of said normal operating system (30) and secure operating system (50) in parallel, **in that** said DRM agent (40) is configured to assess a validity of a right to use the device (10) by checking a parameter (11) and to send a message reflecting said validity to the hypervisor (32) and **in that** the hypervisor (32) is configured to deny execution of the normal operating system (30) if the right to use the device (10) is invalid.

2. The device (10) according to claim 1, wherein the hardware platform (20) includes secure resources (21) and wherein the hypervisor (32), the secure execution environment (SEE) and said secure resources (21) belong to a trusted zone (60) for which the hardware platform (20) prevents direct access to said secure resources (21) from the normal execution environment (NEE).

3. The device (10) according to claim 2, wherein said secure resources include at least one element among the following list: a memory, a software, a bus transaction, an interrupt and a hardware peripheral.

4. The device (10) according to claim 1, wherein the hardware platform (20) supports three virtualization extension levels, an hypervisor level (EL2) running on top of the hardware platform (20), a kernel level (EL1) running on top of the hypervisor level (EL2) and a user level (EL0) running on top of the kernel level (EL1), wherein the hypervisor (32) runs at the hypervisor level (EL2) and is configured to handle the normal execution environment (NEE) and the secure execution environment (SEE) for both said kernel level (EL1) and user level (EL0), wherein the normal operating system (30) is configured to run astride said user level (EL0) and kernel level (EL1) and wherein the secure operating system (50) is configured to run astride said user level (EL0) and kernel level (EL1).

5. The device (10) according to claim 1, wherein the hardware platform (20) is an ARMv8 © component.

6. The device (10) according to claim 1, wherein the device (10) is a mobile phone, a tablet computer, a gaming machine, or a Machine-to-machine box.

7. The device (10) according to claim 1, wherein the parameter (11) is an expiry date, a counter or a cryptogram.

8. A method for managing execution of a normal operating system (30) in a device (10) comprising a hardware platform (20) and a bare metal hypervisor (32) controlling all requests for access to the hardware platform (20), said hypervisor (32) being configured to handle two separate environments: a normal execution environment (NEE) and a secure execution environment (SEE), the normal execution environment (NEE) comprising a normal operating system (30), the secure execution environment (SEE) comprising a secure operating system (50),
**characterized in that** the secure execution environment (SEE) comprises a DRM agent (40) run by the secure operating system (50), **in that** said hypervisor (32) schedules execution of said normal operating system (30) and secure operating system (50) in parallel, **in that** said DRM agent (40) assesses a validity of a right to use the device (10) by checking a parameter (11) and sends a message reflecting said validity to the hypervisor (32) and **in that** the hypervisor (32) denies execution of the normal operating system (30) if the right to use the device (10) is invalid.

9. The method according to claim 8, wherein the hardware platform (20) includes secure resources (21) and wherein both the hypervisor (32), the secure execution environment (SEE) and said secure resources (21) belong to a trusted zone (60) for which the hardware platform (20) prevents direct access to said secure resources (21) from the normal execution environment (NEE).

10. The method according to claim 8, wherein the hardware platform (20) supports three virtualization extension levels, an hypervisor level (EL2) running on top of the hardware platform (20), a kernel level (EL1) running on top of the hypervisor level (EL2) and a user level (EL0) running on top of the kernel level (EL1), wherein the hypervisor (32) runs at the hypervisor level (EL2) and handles the normal execution environment (NEE) and the secure execution environment (SEE) for both said kernel level (EL1) and user level (EL0), wherein the normal operating system (30) runs astride said user level (EL0) and kernel level (EL1) and wherein the secure operating system (50) runs astride said user level (EL0) and kernel level (EL1) .

11. The method according to claim 8, wherein the device (10) is a mobile phone, a tablet computer, a gaming machine, or a Machine-to-machine box.

12. The method according to claim 8, wherein the parameter (11) is an expiry date, a counter or a cryptogram.

13. The method according to claim 8, wherein the secure operating system (50) receives an update message from an external device and updates said parameter (11) using the update message.
